# EUROPÄISCHE PATENTANMELDUNG

(11) **EP 0 525 531 A2**
(43) Veröffentlichungstag der Anmeldung: **03.02.1993**
(21) Anmeldenummer: 92112159.6
(22) Anmeldetag: 16.07.1992
(51) Int. Cl.: G05B 19/405, G05B 19/10

(54) **Steuerpult für Bearbeitungs- und Messmaschinen**

(30) Priorität: 30.07.1991 DE 4125137
(71) Anmelder: Mauser-Werke Oberndorf GmbH, D-78727 Oberndorf (DE)
(72) Erfinder: Welte, Elmar, Dipl.-Ing., W-8500 Nürnberg 50 (DE)
(74) Vertreter: Hofmann, Gerhard, Dipl.-Ing. Patentassessor

(57) **Zusammenfassung**

Ein Steuerpult (1) für Bearbeitungs- und Meßmaschinen besitzt ein Anzeigefeld (3) an dessen Außenseiten analoge und digitale Bedienelemente und Gruppen von Bedienelementen angeordnet sind. Die Zuordnung der Bedienelemente zu Komponenten oder auch zu Funktionen ist durch räumliche Zuordnung von graphischen und alpha-numerischen Symbolen auf dem Anzeigefeld (3) ersichtlich. Die Besonderheit des Steuerpultes (1) besteht nun darin, daß zusätzlich zu den Bedienelementen und den Gruppen von Bedienelementen auf der Oberseite (2) des Steuerpultes (1) ein in das Steuerpult (1) ein-und ausschiebbares Tastenfeld (21) mit einer Volltastatur eingerichtet ist. Dieses Tastenfeld (21) ist ebenso wie die Bedienelemente über ein gemeinsames Interface (39) an einen internen Rechner (26) angeschlossen.

## Beschreibung

Die Erfindung betrifft ein Steuerpult für Bearbeitungs- und Meßmaschinen nach dem Oberbegriff von Patentanspruch 1.

Aus der EP 0 353 706 A2 ist ein Steuerpult für Werkzeugmaschinen mit einem Tastenfeld, mit einem Bildschirm und mit Bedienelementen für einen Cursor bekannt, bei dem die Bedienelemente als sogenannte Touchleisten seitlich je neben einer Längs- und einer Schmalseite des Bildschirms ausgebildet sind. Durch diese Touchleisten soll die Bedienung des Cursors bei dem Steuerpult vereinfacht werden, indem die jeweils gewünschte Positionierung des Cursors in dem gewünschten Bildschirmpunkt schnell und sicher beherrschbar ist.

Die DE 37 18 594 A1 offenbart eine Einrichtung zur Steuerung einer Maschine mit einem Steuerpult, welches aus Bedienelementen zur Eingabe von Befehlen und aus Anzeigeelemten für die Zustandsanzeige besteht. Dabei ist das Anzeigefeld etwa mittig des Steuerpultes angeordnet, während die Bedienelemente und die Gruppen von Bedienelementen jeweils an den Außenseiten des Anzeigefeldes eingerichtet sind. In einer besonderen Ausgestaltung dieses bekannten Steuerpultes erfolgt die Anzeige der Zuordnung der Bedienelemente und der Gruppen von Bedienelementen zu bestimmten Komponenten der Maschine derart, daß die Darstellung der Bedienelemente und der Gruppen von Bedienelementen an einem Anzeigefeld bzw. an den Außenkanten eines Anzeigefeldes angeordnet sind.

Der zum jeweiligen Bedienelement bzw. zu den Gruppen von Bedienelementen benachbarte Bereich des Anzeigefeldes zeigt die jeweilige Funktions- oder Wirkungsweise bzw. die Zuordnung an.

Diese vorgenannten Veröffentlichungen aus dem Stand der Technik zeigen immer nur Steuerpulte mit Bedienelementen zur Eingabe von Befehlen. Solche Bedienelemente sind nicht zur Klarschrift-Information und auch nicht zur Durchführung von Programmänderungen und Wartungsarbeiten geeignet. Für solche Arbeiten am Steuerpult ist es deshalb notwendig, eine externe Volltastatur anzuschließen, die mit dem Rechner bzw. mit den Programmen kommunizieren kann.

Ausgehend von dem vorgenannten Stand der Technik ist es deshalb Aufgabe der Erfindung ein Steuerpult der eingangs genannten Art zu schaffen, mit dem das Bedienen und das Überwachen einer Bearbeitungs- oder einer Meßmaschine wesentlich erleichtert wird und mit dem Klartext-Eingaben, Zugangsberechtigung über Klartext, Programmänderungen und Programmerweiterungen sowie Serviceleistungen direkt möglich sind.

Diese Aufgabe wird erfindungsgemäß durch die kennzeichnenden Merkmale von Patentanspruch 1 gelöst.

Erfinderische Ausgestaltungen und Weiterbildungen des Lösungsgedankens sind den Patentansprüchen 2 bis 8 zu entnehmen.

Nach den Merkmalen der Patentansprüche sind auf der Oberseite des neuen Steuerpultes die einzelnen analogen und digitalen Bedienelemente und die Gruppen von Bedienelementen an den Außenseiten eines Anzeigefeldes, bspw. eines flachen Bildschirmes angeordnet. Mit diesen Bedienelementen ist die Eingabe von Befehlen möglich. Zusätzlich zu diesen Bedienelementen befindet sich im Steuerpult ein aus- und einschiebbares Tastenfeld mit einer Volltastatur nach Art eines Laptop.

Damit erhält die Bedienungsperson die Möglichkeit, über eine volle Schreibmaschinentastatur, bspw. ein Paßwort eingeben zu können, um Zugang zum System auf dem vereinbarten Bedienerlevel zu erhalten. Damit wird es unberechtigten Personen unmöglich gemacht, über das Steuerpult eine Bearbeitungs- oder eine Meßmaschine über das neue Steuerpult zu bedienen. Darüberhinaus können Klartexte, bspw. zum Programmieren oder zum Kommentieren von Meßergebnissen eingegeben werden. Es können Änderungen im AblaufProgramm vorgenommen werden, und es kann ein Service am Programmsystem geleistet werden, mit dem Text- oder Programmänderungen verbunden sind. Da sowohl die ein- und ausschiebbare Tastatur als auch die Bedienelemente auf der Oberseite des Steuerpultes in gleicher Weise über ein Interface mit dem internen Rechner verbunden sind, können auch über die Schreibmaschinentastatur Befehle in entsprechender Anwendung bzw. analog zu den Bedienelementen abgegeben werden. Der interne Rechner reagiert demzufolge sowohl auf die Befehlseingaben über die Bedienelemente bzw. Funktionstasten als auch über Befehlseingaben durch die Volltastatur.

Weitere Vorteile und die Einzelheiten des Erfindungsgegenstandes sind in der nachfolgenden Zeichnungsbeschreibung näher erläutert. Es zeigen:
Figur 1 das Steuerpult in vereinfachter Darstellung in der Draufsicht,
Figur 2 das Steuerpult in der Seitenansicht gemäß dem Pfeil 11 in Figur 1,
Figur 3 eine Draufsicht auf das Anzeigefeld,
Figur 4 eine Draufsicht auf das Anzeigefeld mit räumlicher Zuordnung von Bedienelementen,
Figur 5 eine Draufsicht auf das Anzeigefeld, hier ausgeführt mit Symbolen für das Hauptmenü,
Figur 6 eine Draufsicht auf das Anzeigefeld, hier ausgeführt mit englieschem Klartext und
Figur 7 die Struktur des Steuerpultes als Blockschaltbild.

Das Steuerpult 1 für Bearbeitungs- und Meßmaschinen beinhaltet eine im wesentlichen recheckförmige und über eine zur Bedienungsperson hin geneigte Oberfläche 2, auf welcher die analogen und digitalen Bedienelemente und das Anzeigefeld 3 in Form eines Flachdisplays angeordnet sind.

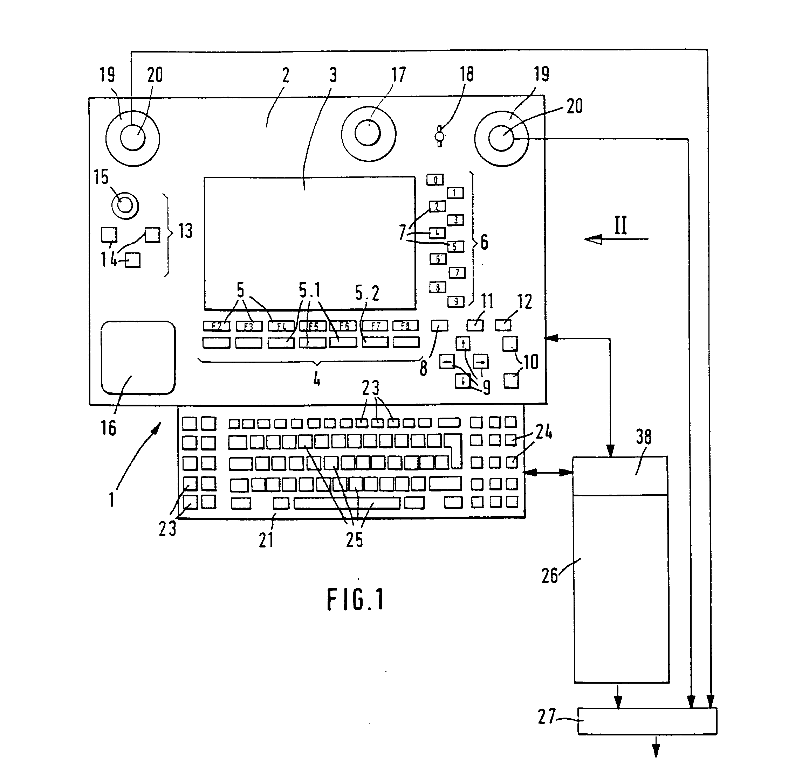

Die Raum-Aufteilung auf dem Steuerpult 1 ist dabei so vorgenommen worden, daß im wesentlichen mittig auf der Oberfläche 2 das Anzeigefeld 3 angeordnet ist und sich die analogen und digitalen Bedienelemente bzw. Gruppen von Bedienelementen an den Außenseiten des Anzeigefeldes 3 gruppieren. Eine erste Gruppe 4 von Bedienelementen befindet sich unterhalb des Anzeigefeldes 3 und besteht aus einer oberen waagerechten Reihe von sieben nebeneinander angeordneten Bedienelementen in Form von frei belegbaren FunktionsTasten 5. Die darunter liegende zweite waagerechte Reihe weist ebenfalls sieben nebeneinander angeordnete Bedienelemente 5. 1 auf, die jedoch alle fest vorbelegte Funktionstasten sind. Die frei belegbaren Funktionstasten 5 zeigen im Beispiel der Figur 1 die Bezeichnungen F2, F3, F4, F5, F6, F7 und F8. Hinter jeder dieser Funktionstasten 5 steht ein entsprechender Tastatur-Code.

An der rechten Außenseite des Anzeigefeldes 3 und im wesentlichen im rechten Winkel zur ersten Gruppe 4 der Bedienelemente ist eine zweite Gruppe 6 von Bedienelementen 7 in zwei senkrechten Reihen nebeneinanderliegend vorgesehen. Diese zweite Gruppe 6 von Bedienelementen 7 stellt einen Zehnerblock dar und erlaubt die Eingabe von Ziffern.

Zwischen der Gruppe 4 und der Gruppe 6 der Bedienelemente 5, 5.1 und 7 befindet sich ein einzelnes digitales Bedienelement 8, welches ein Umschalten für den Block 6 von numerischen Tasten in Funktionstasten und umgekehrt erlaubt. Die weiteren einzelnen Bedienelemente an der rechten Außenseite des Anzeigefeldes 3 sind der Cursor 9, die zwei Tasten 10 für den Blättermodus und die Tasten 11 und 12 für die Eingabe von Plus und Minus.

Auf der linken Außenseite des Anzeigefeldes 3 ist die dritte Gruppe 13 von weiteren Bedienelementen angeordnet worden. Diese Gruppe 13 besteht einmal aus den fest vorbelegten Bedienelementen 14 für die CNC-Steuerung mit den Befehlen "Start", "Stop" und "Reset". Als weiteres Bedienelement 15 zählt zu dieser Gruppe 13 ein Schalter 15 mit einem Potentiometer für die Over-Ride-Funktion der CNC-Steuerung, um so unterschiedliche, von der Bedienungsperson gewünschte Geschwindigkeiten der Bewegungsabläufe fahren zu können.

Unterhalb der Gruppe 13 und neben der Gruppe 4 der Bedienelemente 5, 5.1 ist eine sogenannte Fingermaus oder Touch-Mouse 16 eingerichtet. Durch einfache Fingerberührung auf der Oberfläche der Touch-Mouse 16 lassen sich so Befehle anstelle der Bedienung durch Funktionstasten eingeben. Die Touch-Mouse kann in alternativer Anordnung zur Figur 1 auch eine kapazitive Glasscheibe sein, die auf das Anzeigefeld 3 gelegt ist. Dies vereinfacht in vielen Fällen die Fingerberührung an gewünschten Orten auf dem Anzeigefeld. Eine weitere Alternative der TouchMouse 16 ist die Abdeckung des Anzeigefeldes 3 und der Funktionstasten mit der kapazitiven Glasscheibe, wodurch die Befehlseingaben noch weiter vereinfacht werden. Um beispielsweise die Ziffer "5" aus dem Zehnerblock 7 auf den rechten Bereich des Anzeigefeldes 3 als Menüauswahl zu bringen, kann auf der kapazitiven Glasscheibe direkt der Bereich über der sichtbaren Taste "Ziffer "5" berührt werden. Das Hintasten zu gewünschter Funktionstaste entfällt.

Ein Schalter 17 für die Funktion "NotAus" befindet sich über dem Anzeigefeld 3. Neben diesem Schalter 17 ist ein Schlüsselschalter 18 für die Inbetriebnahme des Steuerpultes 1 eingerichtet.

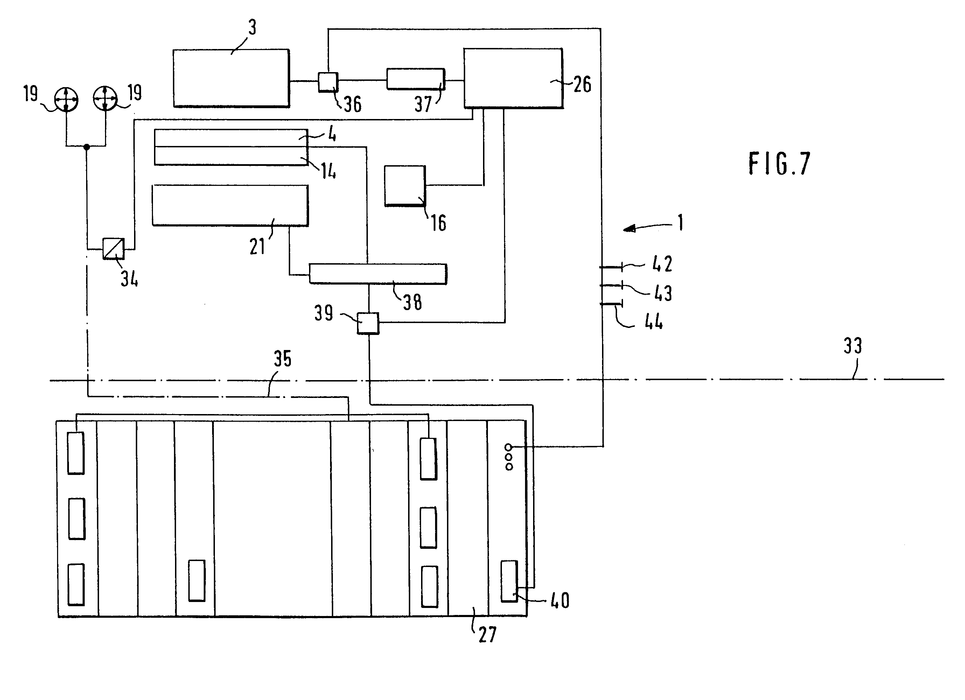

In Höhe des Schalters 17 sind dem rechten und linken Endbereich auf dem Steuerpult 1 je ein analog wirkender Joystick 19 mit einem integrierten Taster 20 untergebracht, mit denen ein direkter Zugriff auf die Steuerung 27 erfolgt. Alternative Lösungen dazu sind zur Figur 7 beschrieben.

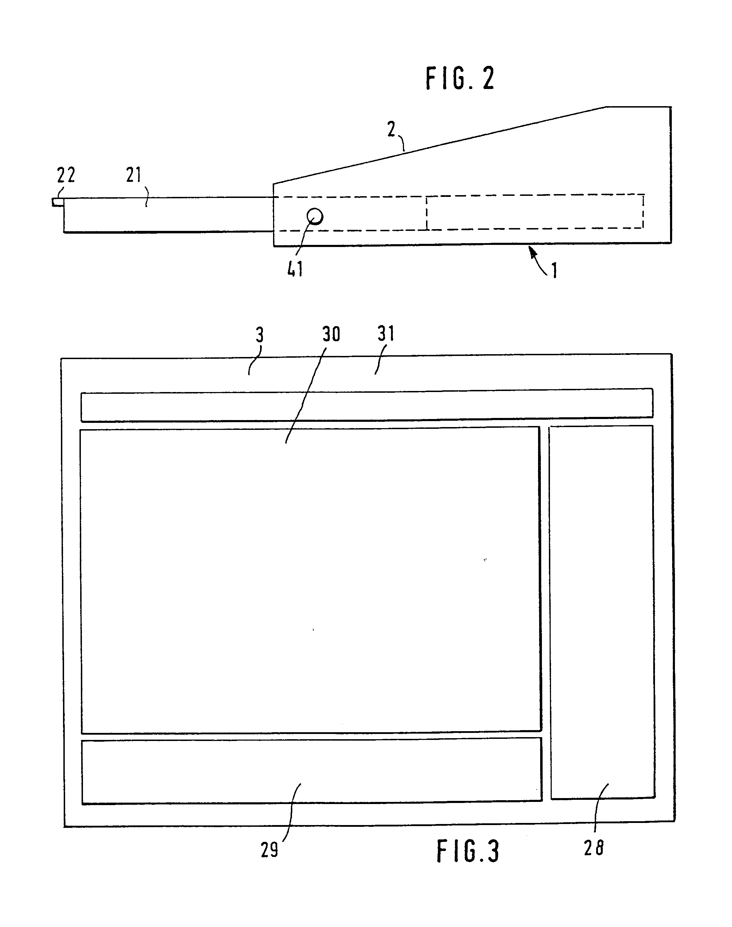

In dem Steuerpult 1, unterhalb der Oberfläche 2, befindet sich ein Tastenfeld 21, welches in dem Steuerpult 1 ein- und ausschiebbar eingesetzt ist. Dabei sind hier nicht gezeigte Raststellungen zur Sicherung des Tastenfeldes 21 im ein- und ausgeschobenen Zustand vorgesehen. Für das Ein- und Ausschieben des Tastenfeldes 21 ist eine vordere Griffleiste 22 an der Stirnseite angebracht worden. Die ein- und ausschiebbare Bewegung des Tastenfeldes 21 ist aus Figur 2 ersichtlich. Die Bewegung des Tastenfeldes 21 und seine Bedienung sind erst nach Betätigen des weiteren Schlüsselschalters 41 möglich.

Das Tastenfeld 21 weist eine Volltastatur nach Art eines Laptop- oder nach Art eines PC-Tastenfeldes auf. Dies bedeutet, daß auf dem Tastenfeld 21 sowohl Funktionstasten 23 als auch ein Zahlenblock 24 und vor allen Dingen auch eine Schreibmaschinentastatur 25 zur Eingabe von alpha-numerischen Zeichen vorgesehen ist.

Wie in stark vereinfachter Darstellung aus Figur 1 hervorgeht, sind sowohl die Bedienelemente und das Anzeigefeld 3 auf dem Steuerpult 1 als auch das Tastenfeld 21 über ein Interface 38 mit dem internen Rechner 26 verbunden. Dieser interne Rechner 26 steht ebenso wie die Joysticks 19 und der Schalter 17 für Not-Aus mit der Steuerung 27 für die Bearbeitungs- oder Meßmaschine in Leitungsverbindung. Auch hier sind alternative Anschlußmöglichkeiten zur Figur 7 beschrieben.

Der Aufbau des Steuerpultes 1 mit analogen und digitalen Bedienelementen und Gruppen von Bedienelementen auf der Oberfläche 2 und dem eingesetzten Tastenfeld 21 erlaubt es der Bedienungsperson sowohl über das Tastenfeld 21 als auch über die Bedienelemente direkt Befehle einzugeben. Darüberhinaus ist es von besonderem Vorteil, daß durch das Tastenfeld 21 alpha-numerische Zeichen eingegeben werden können, so beispielsweise ein Paßwort für die Bedienererlaubnis. Ferner kann über das Tastenfeld 21 im Klartext programmiert werden, es können Änderungen im Programm und auf diese Weise ein Service mit Text- und Programmänderungen oder mit Ergänzungen durchgeführt werden, ohne daß es dazu eines zusätzlichen Hilfsgerätes bedarf, das zusätzlich mitgeführt werden muß. Das Steuerpult 1 kann dadurch auch als Terminal für den Zugriff auf einen weiteren oder externen Rechner über ein Netzwerk dienen.

Die grundsätzlichen Eingabemöglichkeiten bei diesem Steuerpult 1 bestehen über das Tastenfeld 21, die analogen und digitalen Bedienelemente und Gruppen von Bedienelementen, die Fingermaus 16 und über einen sensitiven Bildschirm, der an die Stelle des Anzeigefeldes 3 wahlweise oder austauschbar eingesetzt werden kann. Dies heißt, daß auf dem sensitiven Bildschirm als "Notepad" direkt handschriftlich Befehle geschrieben werden können, die von dem Rechner verstanden werden.

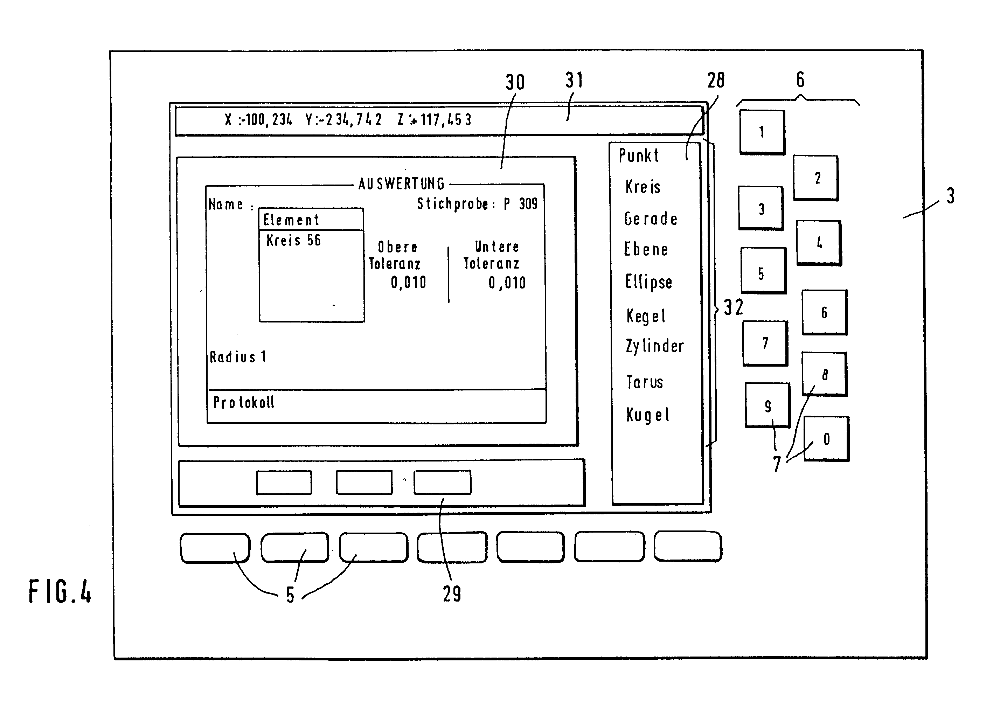

Die besondere Gestaltung des Anzeigefeldes 3 geht aus den Figuren 3, 4, 5 und 6 hervor. Danach ist das Anzeigefeld 3 im wesentlichen in vier Teilbereiche 28 bis 31 aufgegliedert. Diese Aufteilung des Anzeigefeldes 3 in die Teilbereiche der Dialog-Navigation 28, der Daten-Manipulation 29, der Daten-Anzeige 30 und der Maschinen-Statuszeile mit NC-Daten 31 schafft eine klare Bedienstrategie, eine klare und sichtbare Trennung von Navigation und Manipulation und eine gute Koordination und Steuerung des Dialogs. Dabei ist es ferner von Vorteil, daß eine räumliche Zuordnung der Bedienelemente zu den genannten Teilbereichen des Anzeigefeldes 3 vorgenommen worden ist, wie dies inbesondere aus Figur 4 ersichtlich ist.

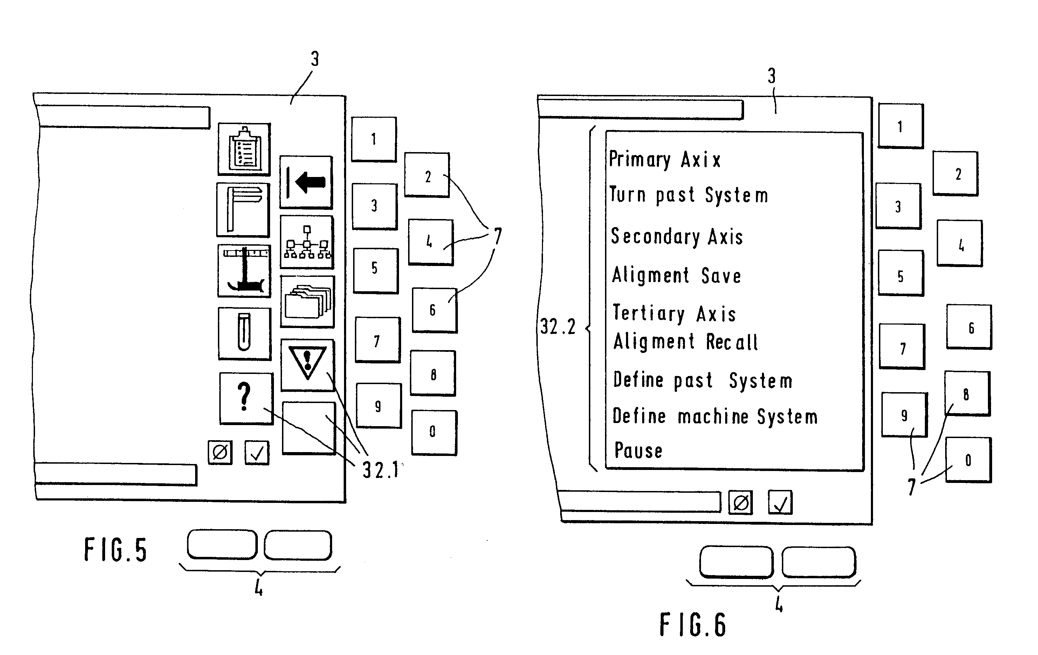

So ist die Gruppe 6 der Bedienelemente 7 als umschaltbarer Zehnerblock neben der am rechten Anzeigefeldrand dargestellten Leiste für die Navigation angeordnet. Durch die Bedienelemnte 7 dieses Zehnerblocks der Gruppe 6 wird das Menü aufgerufen, welches nach Figur 4 im deutschen Klartext als Menüpunkte 32 dargestellt ist. In Figur 5 sind diese Menüpunkte 32 als Pictogramme oder Symbole 32.1 für das Hauptmenü und in Figur 6 im englischen Klartext 32.2 dargestellt worden. Diese Menüpunkte 32 sind sowohl über die Bedienelemente 7 des Zehnerblocks als auch durch die Fingermaus 16 und durch den sensitiven Bildschirm anwählbar. Die Menüstruktur kann entsprechend der Figuren 4, 5 und 6 durch den Benutzer verändert werden. Die Anzeige des gewählten Menüpunktes 32 kann graphisch und wahlweise auch durch Text erfolgen, wobei einzelne Menüpunkte 32, 32.1, 32.2 und auch Programmteile für bestimmte Benutzergruppen sperrbar sind.

Das Feld 29 für die Manipulation kann entsprechend Figur 6 eine Text-Darstellung und alternativ dazu natürlich auch eine Pictogramm-Darstellung aufweisen. Die Funktionen sind durch die Bedienelemente 5 als Funktionstasten oder wieder durch die Fingermaus 16 auslösbar. Dabei ist zu beachten, daß gleiche Funktionen bei einem anderen Kontext auf gleicher Taste auslösbar sind.

Das Hauptfeld 30 des Anzeigefeldes 3 ist für die Datenanzeige vorgesehen und erlaubt dem Benutzer durch sinnvolle Aufteilung eine übersichtliche Gliederung der Daten. Eine Vorgabe bestimmter Auswahlfelder vermeidet hier Eingabefehler, und sogenannte Mußeingabefelder verhindern das Übersehen von Daten. Ferner ist eine Eingabeüberprüfung bei einer Grenzwertvorgabe eingerichtet.

Der obere Bereich 31 dient der Information über den Zustand der NO-Steuerung und der Anzeige von NC-Daten wie Befehle und Achswerte. Die Anzeige von Daten in diesem Bereich 31 des Anzeigefeldes 3 läuft parallel und unabhängig zu den anderen Bereichen 28, 29, 30 des Anzeigefeldes 3 im Online-Betrieb.

Es besteht ferner grundsätzlich die Möglichkeit über eine fest verdrahtete Funktionstaste 5.2 auf einen NC-Editor umzuschalten, der direkt auf die NC-Steuerung 27 wirkt und eine Manipulation von Maschinenparametern und Wartungsarbeiten an der NC-Maschine ermöglicht.

Figur 7 zeigt im Blockschaltbild die Struktur des Steuerpultes 1. Der oberhalb der strichpunktierten Linie 33 dargestellt Block ist das Steuerpult 1 während unterhalb dieser strichpunktierten Linie 33 die Steuerung 27 gezeichnet worden ist. Wie das Blockschaltbild des Steuerpultes 1 zeigt, sind die analogen Joysticks 19 über einen A/D-Wandler 34 mit dem internen Rechner 26 verbunden. Als Alternative ist die strichpunktierte Leitung 35 eingezeichnet, die bedeutet, daß die Joysticks 19 ebenso gut auch direkt mit der Steuerung 27 in einem Analog-Input verbunden sein können. Das Anzeigefeld 3 ist über einen Schalter 36 mit einer Graphik-Karte 37 verbunden, die ihrerseits an den internen Rechner 26 angeschlossen ist. Der Schalter 36 stellt eine Weiche dar zwischen dem Anzeigefeld 3 und der Graphik-Karte 37 einerseits und zwischen dem Anzeigefeld 3 und der Steuerung 27 andererseits. Ebenfalls mit dem internen Rechner 26 ist die Fingermaus 16 verbunden. Die Gruppe 13 der Bedienelemente 14 für die NC-Bedienung und die Gruppe 4 der Bedienelemente 5 als Funktionstasten und alternativ als Softkeys stehen ebenso wie das Tastenfeld 21 mit einem intelligenten Interface bzw. einem Tastaturcontroller 38 in Verbindung. Von diesem Tastaturcontroller 38 geht eine Leitung zu einem Schalter 39, der als Weiche wirkt. Je nach Schalterstellung entsteht eine Verbindung entweder zum internen Rechner 26 oder aber zur CNC-Steuerung 27 über eine serielle Schnittstelle bei 40. Die CNC-Steuerung 27 weist alternativ zu seriellen Schnittstellen 40 ebenso wie das Steuerpult 1 auch eine Ethernet-Schnittstelle auf.

Wie Figur 7 in stark vereinfachter Weise zeigt, ist der interne Rechner 26 wahlweise im Einzelanschluß oder in Zweier- oder Dreierkombination über serielle Schnittstellen 42, eine Ethernet-Schnittstelle 43 und/oder eine ISDN-Schnittstelle 44 für eine bidirektionale Kommunikation nach außen angeschlossen. Durch die ISDN-Schnittstelle 44 ist beispielsweise eine Datenkommunikation über Telefon möglich.

## Patentansprüche

1. Steuerpult für Bearbeitungs- und Meßmaschinen, mit einem Anzeigefeld, an dessen Außenseiten Bedienelemente und Gruppen von Bedienelementen angeordnet sind, deren Zuordnung zu Komponenten oder Funktionen durch räumliche Zuordnung von graphischen oder/und alpha-numerischen Symbolen auf dem Anzeigefeld sichtbar ist,
dadurch gekennzeichnet,
daß analoge und digitale Bedienelemente (5, 5.1, 5.2, 7, 8, 9, 10, 11, 12, 14, 15, 16, 17, 18, 19), Gruppen (4, 6, 13) von Bedienelementen und das Anzeigefeld (3) im wesentlichen auf der Oberseite (2) des Steuerpultes (1) angeordnet sind und in dem Steuerpult (1) ein aus-und einschiebbares Tastenfeld (21) mit einer Volltastatur eingerichtet ist, welches ebenso wie die Bedienelemente und die Gruppen (4, 6, 13) von Bedienelementen über einen gemeinsamen Tastaturcontroller (38) bzw. im Falle der analogen Bedienelemente (19) über eienn Analog-Digital-Wandler (34) an einen Rechner (26) angeschlossen ist.

2. Steuerpult nach Anspruch 1,
dadurch gekennzeichnet,
daß eine erste Gruppe (4) von Bedienelementen (5) unterhalb des Anzeigefeldes (3) aus zwei waagerechte Reihen Funktionstasten gebildet ist, von denen die erste Reihe frei belegbare Funktionstasten (5) und die zweite Reihe fest vorbelegte Funktionstasten (5.1) sind, daß eine zweite Gruppe (6) von Bedienelementen (7) an der einen Außenseite des Anzeigefeldes (3) aus zwei senkrechten Reihen von jeweils fünf Funktionstasten (7) und eine dritte Gruppe (13) von fest vorbelegten Bedienelementen (14, 15) an der anderen Außenseite des Anzeigefeldes (3) gebildet ist, wobei die zwei senkrechten Reihen von Funktionstasten (5, 7) mit einem Umschalter (8) zur wahlweisen Einschaltung als numerische oder als frei belegbare Funktionstasten verbunden sind.

3. Steuerpult nach Anspruch 1,
dadurch gekennzeichnet,
daß als Bedienelemente auf dem Steuerpult (1) zwei analoge Joysticks (19) eingerichtet sind, die mit integrierten Tasten (20) versehen sind und wahlweise auf die Steuerung (27) oder über einen Analog-Digital-Wandler (34) auf einen Rechner (26) wirken.

4. Steuerpult nach Anspruch 1,
dadurch gekennzeichnet,
daß als Bedienelemente auf dem Steuerpult (1) eine Touch-Mouse bzw. eine Finger-Maus (16) vorgesehen ist, die wahlweise auf der Oberfläche (2) des Steuerpultes (1) oder auf dem Anzeigefeld (3) oder über alle digitalen Bedienelemente angeordnet ist.

5. Steuerpult nach den Ansprüchen 1 bis 4,
dadurch gekennzeichnet,
daß Kopplungen vorgesehen sind, durch die das Anzeigefeld (3) sowohl von dem VideoSignal der CNC-Bahnsteuerung als auch von der Graphik-Karte (37) des internen Rechners (26) ansprechbar ist, und daß die Bedienelemente auf dem Steuerpult (1) und die Volltastatur (21) im Steuerpult (1) sowohl die CNC-Bahnsteuerung (27) als auch den internen Rechner (26) anspricht.

6. Steuerpult nach den Ansprüchen 1, 2, 4 und 5, dadurch gekennzeichnet
daß das Anzeigefeld (3) entsprechend der Zuordnung von Bedienelementen und Gruppen von Bedienelementen in vier Bereiche (28, 29, 30, 31) für die Dialog-Navigation (28), die Daten-Manipulation (29), die Daten-Anzeige (30) und den NC-Maschinen-Status (31) aufgegliedert ist.

7. Steuerpult nach den Ansprüchen 1, 2 und 4 bis 6,
dadurch gekennzeichnet,
daß das Anzeigefeld (3) gegen einen sensitiven Bildschirm zur Eingabe von handschriftlichen Daten und Befehlen austauschbar ist.

8. Steuerpult nach den vorgenannten Ansprüchen,
dadurch gekennzeichnet,
daß der interne Rechner (26) wahlweise einzeln oder in Kombination über zumindest eine serielle (42), eine Ethernet (43) oder/und eine ISDN-Schnittstelle (44) für eine bidirektionale Kommunikation angeschlossen ist.
